(19) Europäisches Patentamt / European Patent Office / Office européen des brevets

(11) **EP 4 119 275 B1**

(12) **EUROPEAN PATENT SPECIFICATION**

(45) Date of publication and mention
of the grant of the patent:
**11.12.2024 Bulletin 2024/50**

(21) Application number: **21788524.3**

(22) Date of filing: **12.04.2021**

(51) International Patent Classification (IPC):
**B23K 11/11** *(2006.01)* **B23K 11/16** *(2006.01)*
**B23K 11/24** *(2006.01)* **B23K 11/25** *(2006.01)*
**B23K 101/18** *(2006.01)* **B23K 103/04** *(2006.01)*
**B23K 101/34** *(2006.01)*

(52) Cooperative Patent Classification (CPC):
**B23K 11/24; B23K 11/11; B23K 11/163;**
**B23K 11/255; B23K 11/257;** B23K 2101/18;
B23K 2101/34; B23K 2103/04

(86) International application number:
**PCT/JP2021/015192**

(87) International publication number:
**WO 2021/210541 (21.10.2021 Gazette 2021/42)**

(54) **METHOD FOR PRODUCING RESISTANCE-WELDED MEMBER**

VERFAHREN ZUR HERSTELLUNG EINES WIDERSTANDSGESCHWEISSTEN ELEMENTS

PROCÉDÉ DE PRODUCTION D'UN ÉLÉMENT SOUDÉ PAR RÉSISTANCE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **15.04.2020 JP 2020073126**

(43) Date of publication of application:
**18.01.2023 Bulletin 2023/03**

(73) Proprietor: **Kabushiki Kaisha Kobe Seiko Sho**
**(Kobe Steel, Ltd.)**
**Kobe-shi, Hyogo 651-8585 (JP)**

(72) Inventors:
• **MAEDA, Kyohei**
**Fujisawa-shi, Kanagawa 251-8551 (JP)**
• **SUZUKI, Reiichi**
**Fujisawa-shi, Kanagawa 251-8551 (JP)**
• **IHARA, Ryohei**
**Kobe-shi, Hyogo 651-2271 (JP)**

(74) Representative: **Müller-Boré & Partner**
**Patentanwälte PartG mbB**
**Friedenheimer Brücke 21**
**80639 München (DE)**

(56) References cited:
**EP-A1- 3 473 740** **EP-B1- 3 272 451**
**WO-A1-2014/196499** **DE-A1- 102013 113 449**
**JP-A- 2015 093 282** **US-A1- 2014 308 070**

**Description**

TECHNICAL FIELD

The present invention relates to a method for producing a resistance-welded member, and more particularly, to a method for producing a resistance-welded member in which spot welding is performed by sandwiching and energizing, with a pair of electrodes, both surfaces of a set of three or more sheets including at least one plated steel sheet (see, for example, EP3272451 B1).

BACKGROUND ART

In a plated high-tensile steel sheet, a molten metal brittle crack (hereinafter also referred to as LME crack) occurs at a welded portion due to components in steel. In particular, in the case of a set of three or more sheets, an internal crack of a nugget and a crack originating from the inside of a corona bond (hereinafter, also referred to as an internal crack of a corona bond) are likely to occur. Patent Literature 1 describes a spot welding method in which, in spot welding of a set of sheets including a galvanized steel sheet, an after-weld holding time from the end of welding energization between welding electrodes to a time point when the welding electrode and a member to be welded are not in contact with each other is set in accordance with a total sheet thickness of the steel sheets, whereby even when a disturbance factor is present, cracks just outside a corona bond and at a nugget of a corona bond can be suppressed, and a high-quality spot welded joint can be obtained.

CITATION LIST

PATENT LITERATURE

Patent Literature 1: JP-A-2017-47475

SUMMARY OF INVENTION

TECHNICAL PROBLEM

However, in the spot welding of a set of three or more sheets, it is difficult to prevent the LME crack only by controlling the after-weld holding time described in Patent Literature 1. In addition, Patent Literature 1 does not specify the presence or absence of a compressive control and a relationship between subsequent energization and a holding time at all, and there is room for improvement.

The present invention has been made in view of the above-described problems, and an object of the present invention is to provide a method for producing a resistance-welded member by which an internal crack of a nugget and an internal crack of a corona bond can be suppressed in spot welding of a set of three or more sheets including at least one plated steel sheet.

SOLUTION TO PROBLEM

Accordingly, the above object of the present invention is attained with a configuration of the following (1) related to a method for producing a resistance-welded member.

(1) A method for producing a resistance-welded member made of three or more steel sheets including at least one plated high-tensile steel sheet having a base metal strength of 980 MPa or more, the method including:

a main energization step of performing energization with a first current value $I_1$ while compressing the steel sheets with a first compressive force $P_1$ to form a nugget;
a subsequent energization step of performing, after the main energization step, energization with a second current value $I_2$ smaller than the first current value $I_1$ while compressing the steel sheets with a second compressive force $P_2$ greater than the first compressive force $P_1$; and
an electrode holding step of holding an electrode while maintaining the second compressive force $P_2$ after the subsequent energization, wherein
the steel sheets are joined under conditions satisfying following formulae (1) to (3):

$$A \geq 1.4 \; ...\text{Formula (1)}$$

where $A = P2/t$, P2 represents the second compressive force [kN], and t represents a total sheet thickness [mm] of the steel sheets, respectively,

$$B < 0.7 \; ...\text{Formula (2)}$$

where $B = I2/I1$, I1 represents the first current value [kA], and I2 represents the second current value [kA], respectively, and

$$C \leq Tw2 < 1000 \; ...\text{Formula (3)}$$

where $C = 0.0039Tht^2 - 2.5\,1Tht + 581.3$, Tw2 represents an energization time [ms] in the subsequent energization step, and Tht represents an electrode holding time [ms] in the electrode holding step, respectively.

Further, preferred embodiments of the present invention related to a method for producing a resistance-welded member relates to following (2) to (4).

(2) The method for producing a resistance-welded member according to (1), wherein the Tw2 and the Tht satisfy the following formula (4):

$$D \leq Tw2 < 1000 \; ...\text{Formula (4)}$$

where $D = 0.0063Tht^2 - 4.32Tht + 923.87$.
(3) The method for producing a resistance-welded member according to (1) or (2), wherein a compression rise delay time Tdl which is a time difference between an end of energization with the first current value I1 and a start of compression with the second compressive force P2 satisfies the following formula (5):

$$-100 \leq Tdl \leq 300 \; ...\text{Formula (5)}$$

where Tdl represents the compression rise delay time [ms].
(4) The method for producing a resistance-welded member according to any one of (1) to (3), wherein

a servo compression welding machine is used as a welding machine, and
when a depth of an indentation on the steel sheet by the electrode becomes 0.15 mm or more, control is performed to forcibly terminate only the energization or both the energization and the compression.

ADVANTAGEOUS EFFECTS OF INVENTION

According to the method for producing a resistance-welded member of the present invention, a main energization step of performing energization with a first current value I1 while compressing a steel sheet with a first compressive force P1; a subsequent energization step of performing, after the main energization step, energization with a second current value I2 smaller than the first current value I1 while compressing with a second compressive force P2 greater than the first compressive force P1; and an electrode holding step of holding an electrode while maintaining the second compressive force (P2) after the subsequent energization are provided, and the compressive force is increased during the subsequent energization step. Therefore, even when spot welding three or more plated high-tensile steel sheets having a base metal strength of 980 MPa or more, contraction of a nugget can be suppressed and a tensile stress acting on a welded portion can be reduced.
In addition, by controlling the second compressive force P2 and a total sheet thickness t of the steel sheets, the first current value I1 and the second current value I2, and an energization time Tw2 of the subsequent energization and an electrode holding time Tht after the end of the subsequent energization so as to satisfy a predetermined relationship, the temperature of the welded portion and the tensile stress at the time of electrode opening can be optimized, and thus the internal crack of a nugget and the internal crack of a corona bond can be suppressed.

BRIEF DESCRIPTION OF DRAWINGS

FIG. 1 is a graph of an energization pattern showing a relationship between a current value and a compressive force in a main energization step, a subsequent energization step, and an electrode holding step.

FIG. 2 is a graph of an experimental result showing a relationship between an electrode holding time Tht and a subsequent energization time Tds and presence or absence of an LME crack.

FIG. 3 is a cross-sectional photograph (drawing substitute photograph) showing a welded portion of Example 1.

FIG. 4 is a cross-sectional photograph (drawing substitute photograph) showing a welded portion of Comparative Example 1.

FIG. 5 is a cross-sectional photograph (drawing substitute photograph) showing a welded portion of Example 6.

FIG. 6 is a cross-sectional photograph (drawing substitute photograph) showing a welded portion of Example 14.

FIG. 7 is a cross-sectional photograph (drawing substitute photograph) showing a welded portion of Comparative Example 2.

FIG. 8 is a cross-sectional photograph (drawing substitute photograph) showing a welded portion of Comparative Example 4.

FIG. 9 is a cross-sectional photograph (drawing substitute photograph) showing a welded portion of Comparative Example 6.

FIG. 10 is a cross-sectional photograph (drawing substitute photograph) showing a welded portion of Comparative Example 10.

FIG. 11 is a cross-sectional photograph (drawing substitute photograph) showing a welded portion of Comparative Example 11.

DESCRIPTION OF EMBODIMENTS

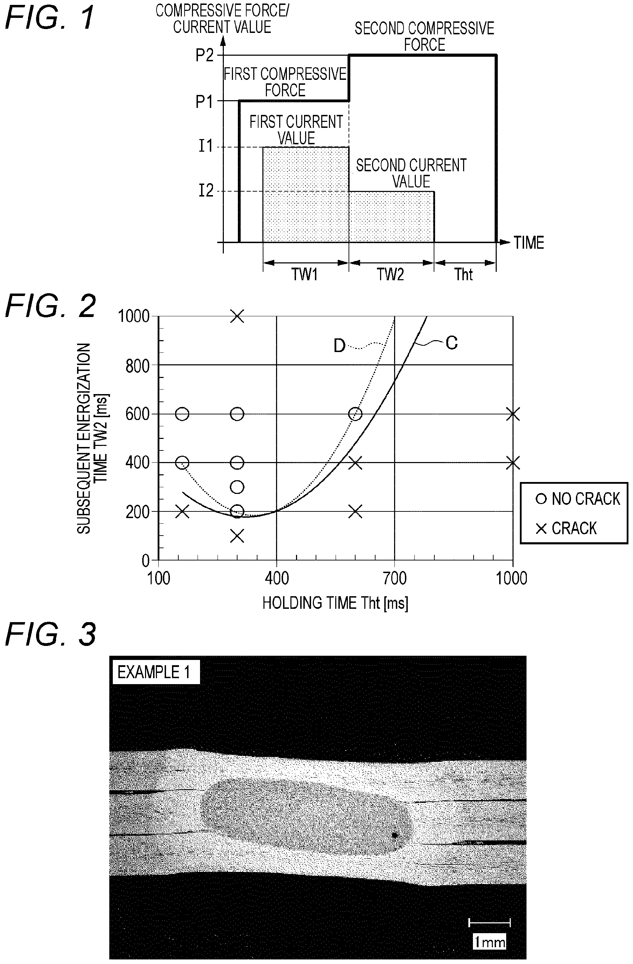

Hereinafter, a method for producing a resistance-welded member according to the present invention will be described in detail with reference to the drawings. FIG. 1 is a graph showing a relationship between a current value and a compressive force in a main energization step, a subsequent energization step, and an electrode holding step in the method for producing a resistance-welded member of the present invention.

The method for producing a resistance-welded member according to the present invention is a producing method in which a resistance-welded member (member to be welded) formed of three or more plated high-tensile steel sheets including at least one plated high-tensile steel sheet having a base metal strength of 980 MPa or more is subjected to a main energization step, a subsequent energization step, and an electrode holding step, thereby welding the resistance-welded member.

Specifically, the main energization is performed by stacking and sandwiching three or more plated high-tensile steel sheets with a pair of welding electrodes, and performing energization with a first current value I1 for an energization time Tw1 while compressing with a first compressive force P1. Next, the subsequent energization is performed by performing energization for an energization time Tw2 with a second current value I2 smaller than the first current value I1 while compressing with a second compressive force P2 greater than the first compressive force P1. Then, while maintaining the second compressive force P2, the welding electrodes and the plated high-tensile steel sheet are not in contact with each other (that is, the electrode is opened) after the elapse of an electrode holding time Tht from the end of the subsequent energization, and the plated high-tensile steel sheets are resistance-welded.

In the method for producing a resistance-welded member according to the present invention, each parameter is controlled so as to satisfy the following formulae (1) to (3) during the above-described resistance welding.

$$A \geq 1.4 \ ... \text{Formula (1)}$$

Where A = P2/t, P2 represents the second compressive force [kN], and t represents a total sheet thickness [mm] of the steel sheets, respectively.

$$B < 0.7 \ ... \text{Formula (2)}$$

Where B = I2/I1, I1 represents the first current value [kA], and I2 represents the second current value [kA], respectively.

$$C \leq Tw2 < 1000 \ ...\text{Formula (3)}$$

Where C = 0.0039Tht² - 2.51Tht + 581.3, Tw2 represents the energization time [ms] in the subsequent energization step, and Tht represents the electrode holding time [ms] in the electrode holding step, respectively.

In the method for producing a resistance-welded member according to the present invention, each parameter is controlled so as to satisfy the following formula (4) or (5) as a preferable condition during the above-described resistance welding.

$$D \leq Tw2 < 1000 \ ...\text{Formula (4)}$$

Where D = 0.0063Tht² - 4.32Tht + 923.87.

$$-100 \leq Tdl \leq 300 \ ...\text{Formula (5)}$$

Where Tdl represents a compression rise delay time [ms] which is a time difference between the end of energization with the first current value I1 and the start of compression with the second compressive force P2.

<Regarding Formula (1)>

During the above-described resistance welding, by performing the welding under the condition satisfying the formula (1), contraction of a nugget can be sufficiently suppressed even in the resistance welding of three or more plated high-tensile steel sheets, and as a result, the tensile stress generated in the nugget or inside of a corona bond is reduced. The upper limit of the second compressive force P2 is not particularly limited, but when the second compressive force P2 is 15 kN or more, the welding electrode may be excessively deformed, and thus P2 < 15 kN is preferable.

<Regarding Formula (2)>

The subsequent energization has an effect of gradually cooling the welded portion, and a temperature gradient in the joint is reduced, so that the tensile stress generated in the nugget or the inside of the corona bond at the time of electrode opening can be reduced. When the subsequent energization time Tw2 is too small, the effect of slow cooling cannot be obtained. On the other hand, when the subsequent energization time Tw2 is too large, the temperature at the time of electrode opening becomes high, and the breaking stress of the welded portion becomes low. Therefore, it is preferable to set the subsequent energization time Tw2 < 1000 ms.

Similarly, when the second current value I2 of the subsequent energization is too high with respect to the first current value I1 of the main energization, the effect of slow cooling cannot be obtained. Therefore, it is necessary to control the first current value I1 and the second current value I2 within the range of the formula (2). Although the lower limit of the second current value I2 is not particularly determined, it is assumed that 2kA < I2 because it is difficult to control the second current value I2 to 2 kA or less due to the characteristics of the welding machine.

<Regarding Formula (3) and Formula (4)>

When the electrode holding time Tht is prolonged, the temperature of the welded portion at the time of electrode opening is lowered. As a result, an amount of molten zinc causing a crack is reduced, and the breaking stress of the welded portion is increased. On the other hand, since the temperature gradient in the joint becomes large, the tensile stress generated in the nugget or the inside of the corona bond at the time of electrode opening increases.

For the reason described above, as shown in the result of Example described later (see FIG. 2), there is an appropriate condition range for the subsequent energization time Tw2 and the electrode holding time Tht. This appropriate condition is a condition satisfying the formula (3), and preferably a condition satisfying the formula (4).

<Regarding Formula (5)>

It is preferable that the compression rise delay time Tdl, which is a time difference between the end of energization with the first current value I1 and the start of compression with the second compressive force P2, is controlled to fall within a condition range satisfying the formula (5). The compression rise delay time Tdl is set to a negative value when the second compressive force P2 rises before the end of the energization with the first current value I1, and is set to a positive value when the second compressive force P2 rises after the end of the energization with the first current value I1.

When the Tdl is less than -100 ms, rising of the compressive force occurs before the nugget starts to contract, and thus the effect of reducing the tensile stress generated in a heat-affected zone may not be obtained. In addition, when the Tdl exceeds 300 ms, the nugget has a large number of solidified portions and the rigidity thereof is increased, and thus the contraction cannot be sufficiently suppressed, and the intended effect may not be obtained.

<Regarding Control of Displacement Amount of Electrode>

When compression is performed during the energization, the nugget may be crushed more than necessary, and the melted metal may be discharged to the outside, that is, so-called expulsion may occur since the rigidity of the melted nugget is low. At the same time, a depth of an indentation formed on the steel sheet by the electrode (that is, an amount of penetration into the steel sheet by the electrode) is increased, and the LME crack is likely to occur in the electrode indentation portion and the periphery thereof. In order to effectively prevent this, it is preferable that the maximum displacement amount of the electrode is set to a predetermined numerical value in advance, and specifically, when the depth of the indentation on the steel sheet by the electrode becomes 0.15 mm or more, electrical displacement control is performed using a servo compression welding machine as a welding machine, for example, in order to forcibly terminate energization only or energization and compression, thereby suppressing deformation of the nugget more than necessary, and further deformation of the indentation portion associated therewith, thereby suppressing occurrence of expulsion. This makes it possible to effectively prevent occurrence of expulsion even when the compression is performed with the second compressive force.

[Example]

In order to confirm the effects of the present invention, Examples of the method for producing a resistance-welded member according to the present invention and Comparative Examples to be compared with Examples will be described.

[Test Material]

Two types of plated steel sheets described below were used as test materials used for welding.

Abbreviation S1: 980 MPa grade GA plated steel sheet (Ceq = 0.38), sheet thickness: 1.0 mm
Abbreviation S2: 980 MPa grade GA plated steel sheet (Ceq = 0.38), sheet thickness: 1.4 mm
Carbon equivalent Ceq = C + Si/30 + Mn/20 + 2P + 4S. The element symbol in the above formula represents the content (mass%) of each element, and the content of an element is set to 0 when the element is not contained.

[Welding Conditions]

The following conditions were common to all Examples and Comparative Examples.

Set: three sheets of the same kind of material
Welding machine: servo compression single-phase alternating current welding machine
Tilt angle: 5°
Sheet gap: 1 mm between sheets
Electrode: DR (dome radial) electrode made of chromium copper for both upper and lower electrodes
(Tip end diameter: 6 mm, tip end curvature radius: 40 mm)

A type of the steel sheet as the test material, a total sheet thickness t of the overlapped steel sheets, a first compressive force P1 [kN], a second compressive force P2 [kN], a first current value I1 [kA], a main energization time Tw1 [ms], a second current value I2 [kA], a subsequent energization time Tw2 [ms], a compression rise delay time Tdl [ms], and an electrode holding time Tht [ms] were set as shown in Table 1 in each of Examples and Comparative Examples.

It should be noted that the electrode holding time Tht is an actually measured value, and a compressive force measured by a load cell incorporated in a welding machine and a current value measured by a weld checker were read into a data logger, and the obtained voltage value was converted and measured. In addition, a time point at which an absolute value of the current value became 0.1 kA or less was defined as a start time point of the electrode holding time, and a time point at which the compressive force became 1 kN or less was defined as an end time point of the electrode holding time.

A cross section of the obtained resistance-welded joint was macroscopically observed by etching using a picric acid saturated aqueous solution, and the presence or absence of an internal crack of a nugget and an internal crack of a corona bond was examined. The observation magnification was 10 times. In addition, regarding the evaluation of the internal crack of a nugget and the internal crack of a corona bond, a sample in which no crack occurred was evaluated as "o" (good), and a sample in which a crack occurred was evaluated as "×" (poor).

The evaluation results of the internal crack of a nugget and the internal crack of a corona bond in each Example and Comparative Example are shown in Table 1 together with the welding conditions. FIG. 2 shows a relationship between the electrode holding time Tht and the subsequent energization time Tw2 and the presence or absence of a crack in a part of each Example and Comparative Example. In FIG. 2, "o" indicates that neither the internal crack of a nugget nor the internal crack of a corona bond occurred, and "×" indicates that at least one of the internal crack of a nugget and the internal crack of a corona bond occurred. Furthermore, "A" to "D" in Table 1 represent the following, respectively, as explained in the above formulae (1) to (4).

$$A = P2/t$$

$$B = I2/I1$$

$$C = 0.0039\mathrm{Tht}^2 - 2.51\mathrm{Tht} + 581.3$$

$$D = 0.0063\mathrm{Tht}^2 - 4.32\mathrm{Tht} + 923.87$$

[Table 1]

Table 1

| | Steel sheet | Total sheet thickness t [mm] | Compressive force | | | Compression rise delay time Tdl [ms] | Main energization | | Subsequent energization | | | Electrode holding time Tht [ms] | C | D | Evaluation | |
| | | | First compressive force P1 [kN] | Second compressive force P2 [kN] | A | | First current value I1 [kA] | Energization time TW1 [ms] | Second current value I2 [kA] | Energization time Tw2 [ms] | B | | | | Internal crack of nugget | Internal crack of corona bond |
|---|---|---|---|---|---|---|---|---|---|---|---|---|---|---|---|---|
| Example 1 | S1 | 3 | 5 | 8 | 2.7 | 0 | 5 | 400 | 3 | 400 | 0.60 | 160 | 280 | 394 | ○ | ○ |
| Example 2 | S1 | 3 | 3 | 6 | 2.0 | 0 | 5 | 400 | 3 | 400 | 0.60 | 160 | 280 | 394 | ○ | ○ |
| Comparative Example 1 | S1 | 3 | 5 | No | - | - | 5 | 400 | No | | - | 160 | - | - | ○ | × |
| Example 3 | S2 | 4.2 | 5 | 8 | 1.9 | 0 | 5.5 | 400 | 3 | 400 | 0.55 | 160 | 280 | 394 | ○ | ○ |
| Example 4 | S2 | 4.2 | 5 | 8 | 1.9 | 0 | 5.5 | 400 | 3 | 600 | 0.55 | 160 | 280 | 394 | ○ | ○ |
| Example 5 | S2 | 4.2 | 5 | 8 | 1.9 | 0 | 5.5 | 400 | 3 | 200 | 0.55 | 300 | 179 | 195 | ○ | ○ |
| Example 6 | S2 | 4.2 | 5 | 8 | 1.9 | 0 | 5.5 | 400 | 3 | 300 | 0.55 | 300 | 179 | 195 | ○ | ○ |
| Example 7 | S2 | 4.2 | 5 | 8 | 1.9 | 0 | 5 | 400 | 3 | 400 | 0.60 | 300 | 179 | 195 | ○ | ○ |
| Example 8 | S2 | 4.2 | 5 | 8 | 1.9 | 0 | 5.5 | 400 | 3 | 400 | 0.55 | 300 | 179 | 195 | ○ | ○ |
| Example 9 | S2 | 4.2 | 5 | 8 | 1.9 | 0 | 6 | 400 | 3 | 400 | 0.50 | 300 | 179 | 195 | ○ | ○ |
| Example 10 | S2 | 4.2 | 5 | 8 | 1.9 | 0 | 5.5 | 400 | 3 | 600 | 0.55 | 300 | 179 | 195 | ○ | ○ |
| Example 11 | S2 | 4.2 | 5 | 8 | 1.9 | 0 | 5.5 | 400 | 3 | 600 | 0.55 | 600 | 479 | 600 | ○ | ○ |
| Example 12 | S2 | 4.2 | 5 | 8 | 1.9 | -100 | 5.5 | 400 | 3 | 400 | 0.55 | 300 | 179 | 195 | ○ | ○ |
| Example 13 | S2 | 4.2 | 5 | 8 | 1.9 | 100 | 5.5 | 400 | 3 | 400 | 0.55 | 300 | 179 | 195 | ○ | ○ |
| Example 14 | S2 | 4.2 | 5 | 8 | 1.9 | 200 | 5.5 | 400 | 3 | 400 | 0.55 | 300 | 179 | 195 | ○ | ○ |
| Example 15 | S2 | 4.2 | 5 | 8 | 1.9 | 300 | 5.5 | 400 | 3 | 400 | 0.55 | 300 | 179 | 195 | ○ | ○ |
| Example 16 | S2 | 4.2 | 5 | 6 | 1.4 | 0 | 5.5 | 400 | 3 | 400 | 0.55 | 300 | 179 | 195 | ○ | ○ |
| Example 17 | S2 | 4.2 | 5 | 10 | 2.4 | 0 | 5.5 | 400 | 3 | 400 | 0.55 | 300 | 179 | 195 | ○ | ○ |

(continued)

| | Steel sheet | Total sheet thickness t [mm] | Compressive force | | A | Compression rise delay time Tdl [ms] | Main energization | | Subsequent energization | | B | Electrode holding time Tht [ms] | C | D | Evaluation | |
| | | | First compressive force P1 [kN] | Second compressive force P2 [kN] | | | First current value 11 [kA] | Energization time TW1 [ms] | Second current value 12 [kA] | Energization time Tw2 [ms] | | | | | Internal crack of nugget | Internal crack of corona bond |
|---|---|---|---|---|---|---|---|---|---|---|---|---|---|---|---|---|
| Comparative Example 2 | S2 | 4.2 | 5 | No | | | 5.5 | 400 | No | | | 300 | | | × | × |
| Comparative Example 3 | S2 | 4.2 | 5 | No | - | - | 5 | 400 | 3 | 400 | 0.60 | 300 | 179 | 195 | ○ | × |
| Comparative Example 4 | S2 | 4.2 | 5 | 8 | 1.9 | 0 | 5.5 | 400 | 3 | 200 | 0.55 | 160 | 280 | 394 | × | × |
| Comparative Example 5 | S2 | 4.2 | 5 | 8 | 1.9 | 0 | 5.5 | 400 | 3 | 100 | 0.55 | 300 | 179 | 195 | ○ | × |
| Comparative Example 6 | S2 | 4.2 | 5 | 8 | 1.9 | 0 | 5,5 | 400 | 3 | 1000 | 0.55 | 300 | 179 | 195 | ○ | × |
| Comparative Example 7 | S2 | 4.2 | 5 | 8 | 1.9 | 0 | 5,5 | 400 | 3 | 200 | 0.55 | 600 | 479 | 600 | ○ | × |
| Comparative Example 8 | S2 | 4.2 | 5 | 8 | 1.9 | 0 | 5.5 | 400 | 3 | 400 | 0.55 | 600 | 479 | 600 | ○ | × |
| Comparative Example 9 | S2 | 4.2 | 5 | 8 | 1.9 | 0 | 5.5 | 400 | 3 | 400 | 0.55 | 1000 | 1971 | 2904 | ○ | × |
| Comparative Example 10 | S2 | 4.2 | 5 | 8 | 1.9 | 0 | 5.5 | 400 | 3 | 600 | 0.55 | 1000 | 1971 | 2904 | ○ | × |

| | Steel sheet | Total sheet thickness t [mm] | Compressive force | | A | Compression rise delay time Tdl [ms] | Main energization | | Subsequent energization | | B | Electrode holding time Tht [ms] | C | D | Evaluation | |
| --- | --- | --- | --- | --- | --- | --- | --- | --- | --- | --- | --- | --- | --- | --- | --- | --- |
| | | | First compressive force P1 [kN] | Second compressive force P2 [kN] | | | First current value 11 [kA] | Energization time TW1 [ms] | Second current value 12 [kA] | Energization time Tw2 [ms] | | | | | Internal crack of nugget | Internal crack of corona bond |
| Comparative Example 11 | S2 | 4.2 | 5 | 8 | 1.9 | 0 | 5.5 | 400 | 4 | 400 | 0.73 | 300 | 179 | 195 | ○ | × |

As shown in Table 1, in Examples 1 to 17, the parameters of the second compressive force P2, the first current value I1, the main energization time Tw1, the second current value I2, the subsequent energization time Tw2, and the electrode holding time Tht satisfied the conditions of the above formulae (1) to (3), and thus neither the internal crack of a nugget nor the internal crack of a corona bond occurred. As a representative example, FIGs. 3, 5, and 6 show cross-sectional photographs showing welded portions of Example 1, Example 6, and Example 14, respectively.

On the other hand, in Comparative Example 1 and Comparative Example 2 in which, as the subsequent energization step after the main energization step, the second compressive force P2 greater than the first compressive force P1 was not applied and energization was not performed with the second current value I2 smaller than the first current value I1, at least one of the internal crack of a nugget and the internal crack of a corona bond crack occurred.

In addition, in Comparative Example 3 in which, as the subsequent energization step after the main energization step, energization was performed with the second current value I2 smaller than the first current value I1, but the second compressive force P2 greater than the first compressive force P1 was not applied, the internal crack of a corona bond occurred.

Furthermore, in Comparative Example 4, Comparative Example 5, and Comparative Examples 7 to 10, since C > Tw2 and the condition of the formula (3) was not satisfied, at least one of the internal crack of a nugget and the internal crack of a corona bond crack occurred. In addition, in Comparative Example 6, since Tw2 = 1000 and the condition of the formula (3) was not satisfied, the internal crack of a corona bond occurred.

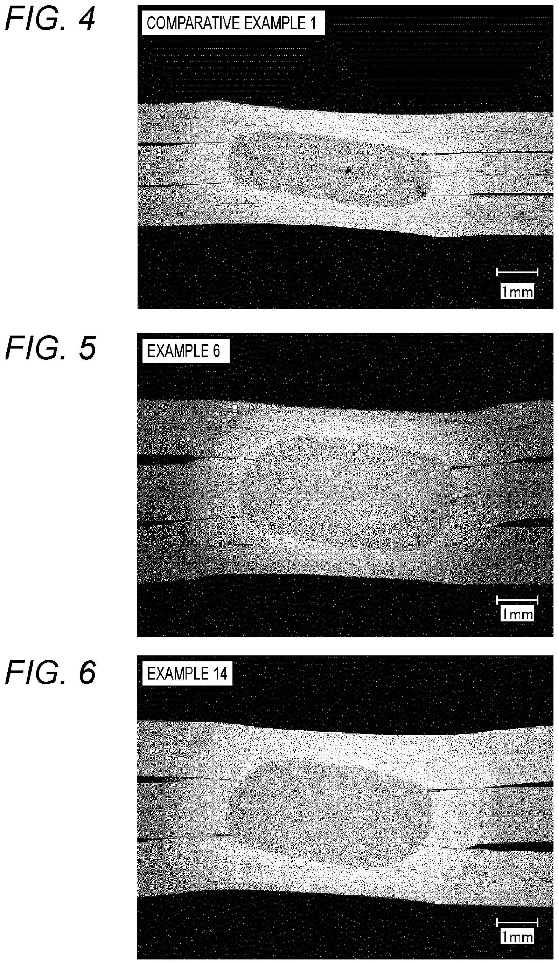

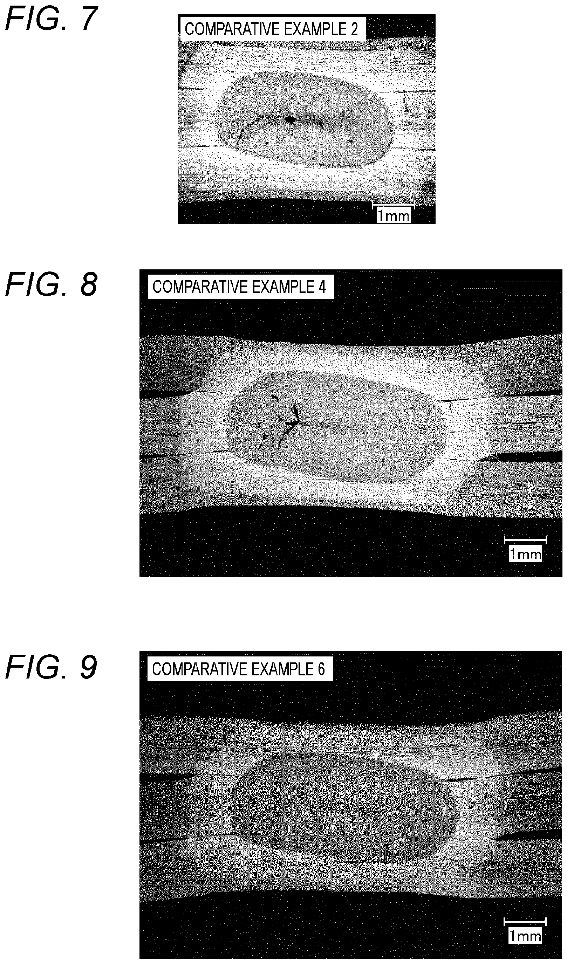

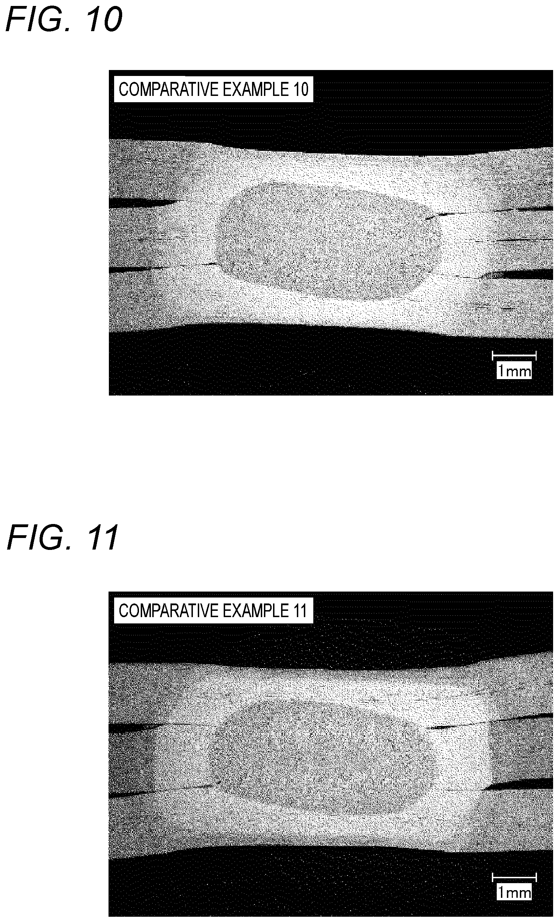

As a representative example, FIGs. 4, 7, 8, 9, 10, and 11 show cross-sectional photographs showing welded portions of Comparative Example 1, Comparative Example 2, Comparative Example 4, Comparative Example 6, Comparative Example 10, and Comparative Example 11, respectively.

In FIG. 2, a curve C indicates "Tw2 = 0.0039Tht$^2$ - 2.51Tht + 581.3", and a curve D indicates "Tw2 = 0.0063Tht$^2$ - 4.32Tht + 923.87". Referring to the result of FIG. 2, the technical significance of satisfying the condition of the formula (3) or (4) described above can be understood.

The present invention is not limited to the embodiments and examples described above, and modifications, improvements, and the like can be made as appropriate.

As described above, the present specification discloses the following matters.

(1) A method for producing a resistance-welded member made of three or more steel sheets including at least one plated high-tensile steel sheet having a base metal strength of 980 MPa or more, the method including:

a main energization step of performing energization with a first current value I1 while compressing the steel sheets with a first compressive force P1) to form a nugget;
a subsequent energization step of performing, after the main energization step, energization with a second current value I2 smaller than the first current value I1 while compressing the steel sheets with a second compressive force P2 greater than the first compressive force P1; and
an electrode holding step of holding an electrode while maintaining the second compressive force (P2) after the subsequent energization, wherein
the steel sheets are joined under conditions satisfying following formulae (1) to (3):

$$A \geq 1.4 \,...\text{Formula (1)}$$

where A = P2/t, P2 represents the second compressive force [kN], and t represents a total sheet thickness [mm] of the steel sheets, respectively,

$$B < 0.7 \,...\text{Formula (2)}$$

where B = I2/ I1, I1 represents the first current value [kA], and I2 represents the second current value [kA], respectively, and

$$C \leq Tw2 < 1000 \,...\text{Formula (3)}$$

where C = 0.0039Tht$^2$ - 2.5 1Tht + 581.3, Tw2 represents an energization time [ms] in the subsequent energization step, and Tht represents an electrode holding time [ms] in the electrode holding step, respectively.

According to this configuration, in the spot welding of a set of three or more sheets including a plated steel sheet, it is possible to suppress the internal crack of a nugget and the internal crack of a corona bond.

(2) The method for producing a resistance-welded member according to (1), wherein the Tw2 and the Tht satisfy the following formula (4):

$$D \leq Tw2 < 1000 \;...\text{Formula (4)}$$

where

$$D = 0.0063 Tht^2 - 4.32 Tht + 923.87.$$

According to this configuration, the LME crack can be prevented by controlling the subsequent energization time Tw2 and the electrode holding time Tht within an appropriate range.

(3) The method for producing a resistance-welded member according to (1) or (2), wherein a compression rise delay time Tdl which is a time difference between an end of energization with the first current value I1 and a start of compression with the second compressive force P2 satisfies the following formula (5):

$$-100 \leq Tdl \leq 300 \;...\text{Formula (5)}$$

where Tdl represents the compression rise delay time [ms].

According to this configuration, the tensile stress generated in a heat-affected zone can be reduced.

(4) The method for producing a resistance-welded member according to any one of (1) to (3), wherein

a servo compression welding machine is used as a welding machine, and
when a depth of an indentation on the steel sheet by the electrode becomes 0.15 mm or more, control is performed to forcibly terminate only the energization or both the energization and the compression.

According to this configuration, it is possible to effectively prevent occurrence of expulsion even when the compression is performed with the second compressive force.

Although various embodiments have been described above with reference to the drawings, it is needless to say that the present invention is not limited to these examples. It will be apparent to those skilled in the art that various changes and modifications may be conceived within the scope of the claims.

REFERENCE SIGNS LIST

| | |
|---|---|
| P1 | First compressive force |
| P2 | Second compressive force |
| I1 | First current value |
| I2 | Second current value |
| Tw1 | Main energization time |
| Tw2 | Subsequent energization time |
| Tht | Electrode holding time |

**Claims**

1. A method for producing a resistance-welded member made of three or more steel sheets including at least one plated high-tensile steel sheet having a base metal strength of 980 MPa or more, the method being **characterized by** comprising the following steps:

    a main energization step of performing energization with a first current value (I1) while compressing the steel sheets with a first compressive force (P1) to form a nugget;
    a subsequent energization step of performing, after the main energization step, energization with a second current value (I2) smaller than the first current value (I1) while compressing the steel sheets with a second compressive force (P2) greater than the first compressive force (P1); and
an electrode holding step of holding an electrode while maintaining the second compressive force (P2) after the subsequent energization, wherein
the steel sheets are joined under conditions satisfying following formulae (1) to (3):

$$A \geq 1.4 \text{ ...Formula (1)}$$

where A = P2/t, P2 represents the second compressive force [kN], and t represents a total sheet thickness [mm] of the steel sheets, respectively,

$$B < 0.7 \text{ ...Formula (2)}$$

where B = I2/ I1, I1 represents the first current value [kA], and I2 represents the second current value [kA], respectively, and

$$C \leq Tw2 < 1000 \text{ ...Formula (3)}$$

where C = 0.0039Tht$^2$ - 2.5 1Tht + 581.3, Tw2 represents an energization time [ms] in the subsequent energization step, and Tht represents an electrode holding time [ms] in the electrode holding step, respectively.

2. The method for producing a resistance-welded member according to claim 1, wherein the Tw2 and the Tht satisfy the following formula (4):

$$D \leq Tw2 < 1000 \text{ ...Formula (4)}$$

where

$$D = 0.0063Tht^2 - 4.32Tht + 923.87.$$

3. The method for producing a resistance-welded member according to claim 1 or 2, wherein a compression rise delay time (Tdl) which is a time difference between an end of energization with the first current value (I1) and a start of compression with the second compressive force (P2) satisfies the following formula (5):

$$-100 \leq Tdl \leq 300 \text{ ...Formula (5)}$$

where Tdl represents the compression rise delay time [ms].

4. The method for producing a resistance-welded member according to any one of claims 1 to 3, wherein

   a servo compression welding machine is used as a welding machine, and
   when a depth of an indentation on the steel sheet by the electrode becomes 0.15 mm or more, control is performed to forcibly terminate only the energization or both the energization and the compression.

**Patentansprüche**

1. Verfahren zur Herstellung eines widerstandsgeschweißten Elements aus drei oder mehr Stahlblechen, enthaltend mindestens ein plattiertes hochfestes Stahlblech mit einer Grundmetallfestigkeit von 980 MPa oder mehr, wobei das Verfahren **dadurch gekennzeichnet ist, dass** es die folgenden Schritte umfasst:

   einen Hauptbestromungsschritt des Durchführens von Bestromung mit einem ersten Stromwert (I1), während die Stahlbleche mit einer ersten Druckkraft (P1) zusammengedrückt werden, um ein Nugget zu bilden;

einen anschließenden Bestromungsschritt nach dem Hauptbestromungsschritt des Durchführens von Bestromung mit einem zweiten Stromwert (I2), der kleiner ist als der erste Stromwert (I1), während die Stahlbleche mit einer zweiten Druckkraft (P2), die größer ist als die erste Druckkraft (P1), zusammengedrückt werden; und einen Elektrodenhalteschritt des Haltens einer Elektrode unter Aufrechterhaltung der zweiten Druckkraft (P2) nach der anschließenden Bestromung, wobei
die Stahlbleche unter Bedingungen verbunden werden, die die folgenden Formeln (1) bis (3) erfüllen:

$$A \geq 1,4 \ ...\text{Formel (1)}$$

wobei A = P2/t, wobei jeweils P2 die zweite Druckkraft [kN] darstellt und t die Gesamtdicke [mm] der Stahlbleche darstellt,

$$B < 0,7 \ ...\text{Formel (2)}$$

wobei B = I2/I1, wobei jeweils I1 den ersten Stromwert [kA] darstellt und I2 den zweiten Stromwert [kA] darstellt, und

$$C \leq Tw2 < 1000 \ ...\text{Formel (3)}$$

wobei $C = 0,0039Tht^2 - 2,51Tht + 581,3$, wobei jeweils Tw2 eine Bestromungszeit [ms] in dem anschließenden Bestromungsschritt darstellt und Tht eine Elektrodenhaltezeit [ms] in dem Elektrodenhalteschritt darstellt.

2. Verfahren zur Herstellung eines widerstandsgeschweißten Elements nach Anspruch 1, wobei Tw2 und Tht die folgende Formel (4) erfüllen:

$$D \leq Tw2 < 1000 \ ...\text{Formel (4)}$$

wobei

$$D = 0,0063Tht^2 - 4,32Tht + 923,87.$$

3. Verfahren zur Herstellung eines widerstandsgeschweißten Elements nach Anspruch 1 oder 2, wobei eine Kompressionsanstiegsverzögerungszeit (Tdl), die ein Zeitunterschied zwischen einem Ende der Bestromung mit dem ersten Stromwert (I1) und einem Beginn des Zusammendrückens mit der zweiten Druckkraft (P2) darstellt, die folgende Formel (5) erfüllt:

$$-100 \leq Tdl \leq 300 \ ...\text{Formel (5)}$$

wobei Tdl die Kompressionsanstiegsverzögerungszeit [ms] darstellt.

4. Verfahren zur Herstellung eines widerstandsgeschweißten Elements nach einem der Ansprüche 1 bis 3, wobei

eine Servokompressionsschweißmaschine als eine Schweißmaschine verwendet wird und
wenn eine Tiefe einer Vertiefung auf dem Stahlblech durch die Elektrode 0,15 mm oder mehr wird, eine Steuerung durchgeführt wird, um nur die Bestromung oder sowohl die Bestromung als auch das Zusammendrücken zwangsweise zu beenden.

**Revendications**

1. Procédé de production d'un élément soudé par résistance réalisé en trois feuilles d'acier ou plus incluant au moins une feuille d'acier plaqué à haute résistance à la traction ayant une résistance métallique de base de 980 MPa ou plus, le procédé étant **caractérisé par** le fait de comprendre les étapes suivantes :

une étape d'excitation principale consistant à réaliser une excitation avec une première valeur de courant (I1) tout en comprimant les feuilles d'acier avec une première force compressive (P1) pour former un noyau ;
une étape d'excitation subséquente consistant à réaliser, après l'étape d'excitation principale, une excitation avec une seconde valeur de courant (I2) inférieure à la première valeur de courant (I1) tout en comprimant les feuilles d'acier avec une seconde force compressive (P2) supérieure à la première force compressive (P1) ; et
une étape de maintien d'électrode consistant à maintenir une électrode tout en maintenant la seconde force compressive (P2) après l'excitation subséquente,
dans lequel
les feuilles d'acier sont raccordées dans des conditions satisfaisant les formules suivantes (1) à (3) :

$$A \geq 1,4 \qquad \text{Formule (1)}$$

où A = P2/t, P2 représente la seconde force compressive [kN] et t représente une épaisseur de feuille totale [mm] des feuilles d'acier, respectivement,

$$B < 0,7 \qquad \text{Formule (2)}$$

où B = I2/I1, I1 représente la première valeur de courant [kA] et I2 représente la seconde valeur de courant [kA], respectivement, et

$$C \leq Tw2 < 1000 \qquad \text{Formule (3)}$$

où $C = 0,0039Tht^2 - 2,51Tht + 581,3$, Tw2 représente une durée d'excitation [ms] dans l'étape d'excitation subséquente et Tht représente une durée de maintien d'électrode [ms] dans l'étape de maintien d'électrode, respectivement.

2. Procédé de production d'un élément soudé par résistance selon la revendication 1, dans lequel la Tw2 et la Tht satisfont la formule suivante (4) :

$$D \leq Tw2 < 1000 \qquad \text{Formule (4)}$$

où

$$D = 0,0063Tht^2 - 4,32Tht + 923,87.$$

3. Procédé de production d'un élément soudé par résistance selon la revendication 1 ou 2, dans lequel une durée de retard d'augmentation de compression (Td1) qui est un décalage horaire entre une fin d'excitation avec la première valeur de courant (I1) et un début de compression avec la seconde force compressive (P2) satisfait la formule suivante (5) :

$$-100 \leq Tdl \leq 300 \qquad \text{Formule (5)}$$

où Tdl représente la durée de retard d'augmentation de compression [ms].

4. Procédé de production d'un élément soudé par résistance selon l'une quelconque des revendications 1 à 3, dans lequel

une servo-machine à souder par compression est utilisée comme une machine à souder, et
lorsqu'une profondeur d'une indentation sur la feuille d'acier par l'électrode devient 0,15 mm ou plus, une commande est réalisée pour terminer de force uniquement l'excitation ou à la fois l'excitation et la compression.

## FIG. 1

## FIG. 2

## FIG. 3

EXAMPLE 1

1 mm

*FIG. 4*

COMPARATIVE EXAMPLE 1

1mm

*FIG. 5*

EXAMPLE 6

1mm

*FIG. 6*

EXAMPLE 14

1mm

*FIG. 7*

COMPARATIVE EXAMPLE 2

1mm

*FIG. 8*

COMPARATIVE EXAMPLE 4

1mm

*FIG. 9*

COMPARATIVE EXAMPLE 6

1mm

## FIG. 10

## FIG. 11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3272451 B1

- JP 2017047475 A